(19) Europäisches Patentamt
European Patent Office
Office européen des brevets

(11) EP 2 228 395 A1

(12) EUROPEAN PATENT APPLICATION

(43) Date of publication:
**15.09.2010 Bulletin 2010/37**

(51) Int Cl.:
***C08F 10/00*** *(2006.01)* ***C08F 4/685*** *(2006.01)*

(21) Application number: **09153514.6**

(22) Date of filing: **24.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Borealis AG**
**1220 Vienna (AT)**

(72) Inventors:
- **Garoff, Thomas**
  **00840, Helsinki (FI)**
- **Waldvogel, Päivi**
  **06450, Porvoo (FI)**
- **Kallio, Kalle**
  **06400, Porvoo (FI)**
- **Eriksson, Virginie**
  **00810, Helsinki (FI)**
- **Aittola, Aki**
  **01120, Västerskog (FI)**
- **Kokko, Esa**
  **01520, Vantaa (FI)**

(74) Representative: **Kador & Partner**
**Corneliusstrasse 15**
**80469 München (DE)**

# (54) Improved multi-stage process for producing multi-modal ethylene polymer composition

(57) Multi-stage polymerization process for the production of a multi-modal linear low density polyethylene in at least two staged reactors connected in series comprising at least
(i) polymerizing in a first slurry phase stage ethylene monomers and optionally one or more alpha-olefine comonomers, in the presence of a Ziegler-Natta polymerization catalyst system to obtain a first polyethylene fraction component (A)
(ii) polymerizing in a second gas or slurry phase stage ethylene monomers and one or more alpha-olefine comonomers, in the presence of a Ziegler-Natta polymerization catalyst system to obtain a second polyethylene fraction component (B),

whereby the Ziegler-Natta polymerization catalyst system comprises
1) a solid procatalyst formed by contacting at least:
a) a Mg-alcoholate complex of the formula (I):
$Mg(OR_1)_{2-n}(R_1)_n$, wherein each $R_1$ independently represents a $C_1$-$C_{20}$ hydrocarbyl group and $0 \leq n < 2$ and may or may not be an integer;
b) an aluminium compound of the formula (II)
$Al(R_2)_mX_{3-m}$, wherein each $R_2$ independently represents an alkyl of up to 6 carbon atoms; each X is independently a halogen; $0 \leq m < 3$ and m and may or may not be an integer
c) a vanadium compound and a titanium compound in portions such as to provide a molar ratio of V:Ti from 10: 90 to 90: 10
in order to yield the solid procatalyst and

2) one or more organometallic cocatalyst(s) of the formula (III)

$(RO)_z$
|
$R_y$-Al-$Cl_x$

wherein each R is independently a $C_1$-$C_{20}$-alkyl group, $0 \leq x \leq 2$; $1 \leq y$ 5 3; 0 5 z 5 2 and $x + y + z = 3$; x, y and z may or may not be an integer,
yielding a multi-modal polyethylene,
whereby the process shows a reduced change of comonomer response with polymerization time and a more stable comonomer conversion with polymerization time compared to multi-stage processes using Ziegler-Natta catalysts with 100% Ti.

EP 2 228 395 A1

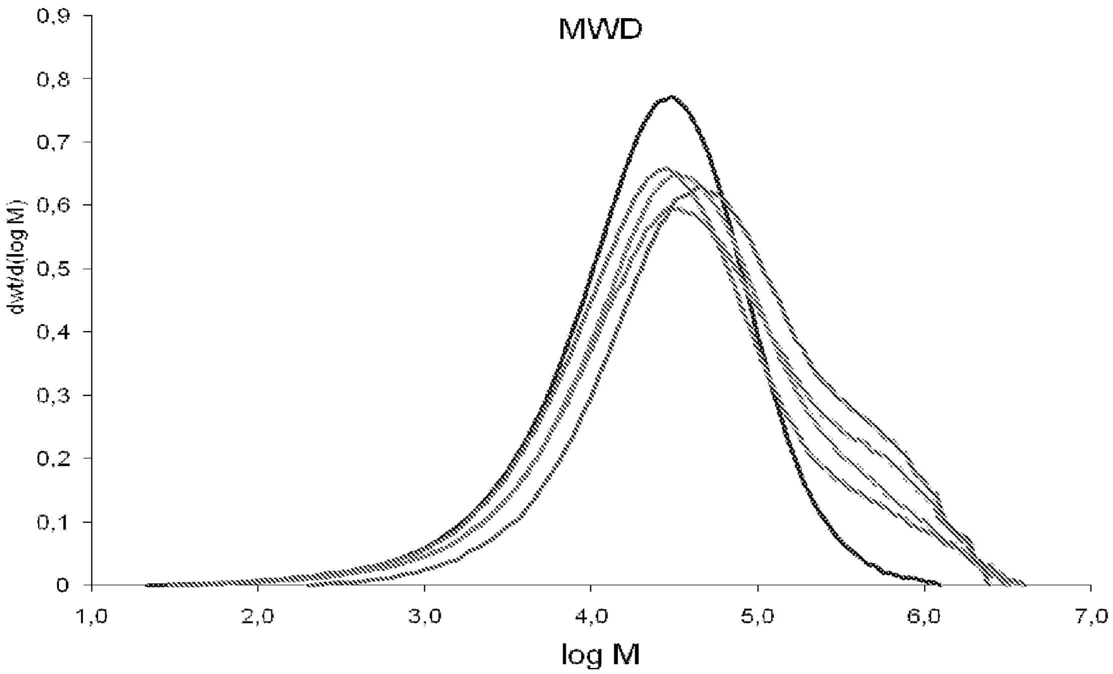


**Figure 1.** GPC curves for examples 2, 3, 4, 5 and 6. Amount of high molecular weight polymer is just increasing accoding to increased split (more GPR polymer is produced)

## Description

The invention relates to an improved multi-stage process for producing multi-modal, preferably bimodal ethylene polymer composition in the presence of an improved solid vanadium-containing Ziegler-Natta catalyst system, to the use of the an improved solid vanadium-containing Ziegler-Natta catalyst system for producing multi-modal, preferably bimodal ethylene polymer composition, to ethylene polymer compositions obtainable by the use of this special catalyst system and to articles manufactured therefrom.

One of the main challenges when producing multimodal, e.g. bimodal ethylene polymer composition grades in full scale is the formation of chunks, lumps and sheeting. These problems are very pronounced when using a Ziegler-Natta type of catalyst, which comprises at least one compound of a transition metal, such as titanium or vanadium.
One of the main reasons is the loss of comonomer sensitivity respectively response with time. As is known from the state of the art Ziegler-Natta (ZN) catalyst compositions tend to change their behaviour during the polymerization process in respect of time ("time-drift"), which has a huge impact on polymer properties and polymer homogeneity. This effect is even more pronounced when pure vanadium catalysts are considered.
This s.c. "time -drift" in catalyst behaviour causes even more problems if the polymerization process is a continuous multi-stage process, where residence time distribution combined with the "time-drift" problem can lead to further inhomogeneity of the polymer produced and to the formation of sticky material. For example, it can happen, that catalyst particles that stayed a longer time in the first reactor may have very low comonomer response in the second reactor where copolymerization is usually performed. In the worst case polymer particles are produced containing a lot of comonomer and on the other hand polymer particles containing virtually no comonomer at all are yielded.

Polyethylene requires for certain applications a bimodal distribution of molecular weight in order to yield optimal structural characteristics and physical properties. This can be achieved by ensuring that the polyethylene contains a component having a lower molecular weight (LMW component) and a component having a higher molecular weight (HMW component). The lower molecular weight mode imbues the final polymer with the desired processibility, whilst the higher molecular weight mode imbues the product with the necessary durability and hardness.
In the past, attempts have been made to devise processes for producing bimodal polyolefins. One well-known process makes use of two reactors, one for producing the lower molecular weight component and the second for producing the higher molecular weight component. These reactors may be employed in parallel, in which case the components must be mixed after production. More commonly, the reactors are employed in series, such that one component is formed in the first reactor and the second is formed in the second reactor in the presence of the first component. In this way, the two components are more intimately mixed, since one is formed in the presence of the other.

Known two-stage processes are for instance liquid (e.g. slurry) phase-liquid (e.g. slurry) phase processes, gas phase-gas phase processes and liquid (e.g. slurry) phase-gas phase processes.

It is known that there are several disadvantages of two-stage processes for producing bimodal polyethylene compositions known from the state of the art using traditional Ziegler-Natta catalyst or vanadium catalyst compositions. Such processes comprise in general for example the steps of

(i) polymerizing in a first slurry phase stage ethylene monomers and optionally one or more alpha-olefine comonomers to obtain a first polyethylene fraction component (A)
(ii) polymerizing in a second gas or slurry phase stage ethylene monomers and one or more alpha-olefine comonomers to obtain a second polyethylene fraction component (B),

one of fraction component (A) or (B) being the low molecular weight component of the polyethylene, the other being the high molecular weight component of the polyethylene.
If fraction component (A) is the lower molecular weight component of the bimodal polyethylene and fraction component (B) thus being the higher molecular weight component of the bimodal polyethylene, this is called normal mode.
On the contrary, if fraction component (A) is the higher molecular weight component of the bimodal polyethylene and thus fraction (B) being the lower molecular weight component of the bimodal polyethylene, this is called reverse mode.
One problem is that the bimodal polymers produced have lower and higher molecular weight components both tending to have a broad MWD, where in particular the HMW components tend to have significant lower molecular weight "tails" which have deleterious affects on the mechanical properties of the polymer and on articles made from the polymer.
A further problem encountered when manufacturing bimodal polyethylene compositions is reactor fouling. The low density component (i.e. HMW component) of such a bimodal resin has very low crystallinity which was thought to lead to reactor fouling.
Furthermore in the reverse mode, if it is tried to produce the lower density component (i.e. HMW component) in a first slurry polymerization step, this component tends to dissolve or swell in the diluents used when the comonomer content is high and comonomer distribution is bad. In the normal mode, where the lower density component is produced in a second gas phase polymerization step, this component can not be dissolved but it becomes too sticky or soft and can

start clump formation or sheeting and chunking.
An additional problem, as already mentioned above, is the inhomogeneity of the polymer produced due to the s.c. time drift and residence time distribution, which inhomogeneity between different polymer particles can be very large when each particle spent different times in the two stages of the polymerization process, leading to very different comonomer incorporation in different polymer particles.
Furthermore these known processes need quite a high comonomer concentration to reach high comonomer incorporation and thus lower densities, especially in the HMW component.

Hence, there is still a need for improved multi-stage processes which avoid the disadvantages and lacks in well-known multi-stage processes using conventional Ziegler-Natta or vanadium catalyst systems, show an improved operability, have increased comonomer conversion and a more or less constant comonomer sensitivity in respect to time and thus overcome known problems of state of the art catalysts.

It is thus an object of the present invention to provide a multi-stage process for producing multi-modal, preferably bimodal polyethylene compositions, which shows an improved operability, has increased comonomer conversion and more or less constant comonomer sensitivity in respect to time, thus allowing an improved control of polymer properties like density.

Thus viewed from a first aspect the invention provides a multi-stage polymerization process for the production of a multi-modal polyethylene compositions in at least two staged reactors connected in series comprising at least

(i) polymerizing in a first slurry phase stage ethylene monomers and optionally one or more alpha-olefine comonomers, in the presence of a Ziegler-Natta polymerization catalyst system to obtain a first polyethylene fraction component (A),
(ii) polymerizing in a second gas stage ethylene monomers and one or more alpha-olefine comonomers, in the presence of a Ziegler-Natta polymerization catalyst system to obtain a second polyethylene fraction component (B),

one of fraction component (A) or (B) being the lower molecular weight component of the polyethylene, the other being the higher molecular weight component of the polyethylene,
wherein the second polymerization step is carried out in the presence of the polymerization product of the first polymerization step and
whereby the Ziegler-Natta polymerization catalyst system comprises

1) a solid procatalyst formed by contacting at least:

a) a Mg-alcoholate complex of the formula (I):

$Mg(OR_1)_{2-n}(R_1)_n$, wherein each $R_1$ independently represents a $C_1$-$C_{20}$ hydrocarbyl group and $0 \leq n < 2$ and may or may not be an integer;

b) an aluminium compound of the formula (II)

$Al(R_2)_n, X_{3-m}$, wherein each $R_2$ independently represents an alkyl of up to 6 carbon atoms; each X is independently a halogen; $0 \leq m < 3$ and m and may or may not be an integer

c) a vanadium compound and a titanium compound in portions such as to provide a molar ratio of V:Ti from 10:90 to 90:10
in order to yield the solid procatalyst and

2) one or more organometallic cocatalyst(s) of the formula (III)

$$\begin{array}{c}(RO)_z\\ |\\ R_y\text{-Al-Cl}_x\end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer,

yielding a multi-modal polyethylene composition with a density according to ISO 1183 of 900 to 980 kg/m$^3$,

whereby the process shows a reduced change of comonomer response with polymerization time and a more stable comonomer conversion with polymerization time compared to multi-stage processes using Ziegler-Natta catalysts with 100% Ti.

Viewed from a further aspect the invention provides multi-modal, preferably bimodal polyethylene compositions obtainable by the process as herein described.

Viewed from a yet further aspect the invention provides use of the multi-modal, preferably bimodal polyethylene compositions as hereinbefore described for the manufacture of articles, especially of films and pipes.

Furthermore one additional aspect of the invention is the use of the special vanadium-containing Ziegler-Natta catalyst system in a multi-stage, preferably two-stage polymerization process to produce multi-modal, preferably bimodal polyethylene compositions.

As used herein the term "multi-modal" and "bimodal" is intended to cover polymers having at least two differently centred maxima along the x-axis of their molecular weight distribution curve as determined by gel permeation chromatography. In such a curve d(log(MW)) is plotted as ordinate against log (MW), where MW is molecular weight.

The terms higher and lower molecular weight components are used herein to indicate that one component of the polymer has a higher molecular weight than the other component. The HMW component has a higher molecular weight than the LMW component, i.e. the terms HMW and LMW are relative.

The process according to the invention shows more or less constant comonomer sensitivity in respect to polymerization time, i.e. almost the same amount of comonomer is converted independently of polymerization time. Furthermore the process according to the invention leads to a higher comonomer conversion compared to processes using traditional Ziegler-Natta catalysts under the same conditions.

The invention is based on the use of the combination of a multi-stage, preferably two-stage polymerization process and a special ZN catalyst system.

According to the invention an improved solid vanadium-containing Ziegler-Natta catalyst system is used for the two-stage polymerization.

This improved solid Ziegler-Natta catalyst system comprises:

1) a solid procatalyst formed by contacting at least:

a) a Mg-alcoholate complex of the formula (I):
$Mg(OR_1)_{2-n}(R_1)_n$, wherein each $R_1$ independently represents a $C_1$-$C_{20}$ hydrocarbyl group and $0 \leq n < 2$ and may or may not be an integer;
b) an aluminium compound of the formula (II)
$Al(R_2)_n,X_{3-m}$, wherein each $R_2$ independently represents an alkyl of up to 6 carbon atoms; each X is independently a halogen; $0 \leq m < 3$ and m and may or may not be an integer
c) a vanadium compound and a titanium compound in portions such as to provide a molar ratio of V:Ti from 10:90 to 90:10.

in order to yield the solid procatalyst and
2) one or more organometallic cocatalyst(s) of the formula (III)

$$\begin{array}{c}(RO)_z\\ |\\ R_y\text{-}Al\text{-}Cl_x\end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer.

As stated above, solid procatalysts are formed by contacting at least a) a Mg-alcoholate complex of the formula (I), b) an aluminium compound of the formula (II) and c) a vanadium compound and a titanium compound.

For forming the solid procatalyst including preparing a special $MgCl_2$-carrier consisting of $MgCl_2$/Et-Al-$(O\text{-}R)_2$ as support, the method of contacting components a), b) and c) as described in WO2004/055068 is used.

According to this method the solid procatalyst is prepared by contacting

[A] a solid magnesium aluminium complex containing magnesium, halogen and aluminium with

[B] a vanadium compound and a titanium compound in portions such as to provide a mole ratio of V:Ti from 10:90

to 90:10.

First the solid magnesium aluminium complex (= catalyst support) containing magnesium, halogen and aluminium is described below:

Said complex is obtained by

(a1) adding a solution of a magnesium compound of the formula (I):

$Mg(OR_1)_{2-n}(R_1)_n$, wherein each $R_1$ independently represents a $C_1$-$C_{20}$ hydrocarbyl group and $0 \leq n < 2$ and may or may not be an integer;
to a solution of a compound of formula (II): $Al(R_2)_n,X_{3-m}$, wherein each $R_2$ independently represents an alkyl of up to 6 carbon atoms; X is independently a halogen; $0 \leq m < 3$ and m and may or may not be an integer

(a2) separating the solidified reaction product from the reaction mixture and washing the product with a wash solution until a molar ratio of aluminium to magnesium has a value of at least 0.3

Such complexes are known, for example from WO 2004/055068. Their preparation is done as described in WO 2004/055068.
The patent referred to in this specification is incorporated by reference herein.
Accordingly, the catalyst support prepared according to this method comprises a reaction product formed at least from:

1) Compound (1): A magnesium hydrocarbyloxy compound of a general formula (I):

$$Mg(OR_1)_{2-n}(R_1)_n,$$

wherein each $R_1$ is independently a $C_{1-20}$ hydrocarbyl group, e.g. a $C_{2-15}$ group, preferably a $C_{3-10}$ group, such as a $C_{4-10}$ group, suitably a $C_{4-10}$ group e.g. an alkyl, cycloalkyl, alkylcycloalkyl, cycloalkylalkyl, aryl, arylalkyl, or alkylaryl, wherein "alkyl" used as alone or as part of another option can be linear or branched and "aryl" is preferably of 5-12 carbon ring atoms, suitably phenyl or naphthyl; e.g. each $R_1$ is independently an ethyl, propyl, butyl, pentyl, hexyl, heptyl, octyl;
and $0 \leq n < 2$ and n may or may not be an integer.
In a preferred embodiment of the invention, a magnesium hydrocarbyloxy compound of formula $Mg(OR_1)_{2-n}(R_1)_n$ (I), wherein each $R_1$ is independently as defined above; is used, which may be commercially available or, preferably, is a reaction mixture of a magnesium alkyl compound of formula $Mg(R_1)_2$ (III), wherein each $R_1$ independently is as defined above, with an alcohol $R_1OH$, wherein $R_1$ is as defined above;
and

2) Compound (2): A halogen-containing compound of formula (II):
$Al(R_2)_mX_{3-m}$,
wherein each $R_2$ independently represents an alkyl of up to 6 carbon atoms, preferably up to 4 carbon atoms; and each X is independently a halogen, preferably a chlorine; $0 \leq m < 3$ and m may or may not be an integer; e.g. dialkyl aluminium chlorides, such as dimethyl aluminium chloride, diethyl aluminium chloride, diisobutyl aluminium chloride, or alkyl aluminium dichlorides, such as ethyl aluminium dichloride (EADC) or methyl aluminium dichloride;

Preferably, the support consists of the reaction product of compound (1), optionally prepared from compound (IV) and $R_1OH$ as defined above, and of compound (2).
A solution of the compound(s) (1) is added to the solution of compound(s) (2) to cause the solidification (precipitation) of the solid reaction product. A slowly addition under mixing is preferred. By slowly addition it is meant herein that the solution (1) is added gradually, e.g. drop wise or other similar means, to cause a uniform solidification reaction as known in the art.
A solution (1) containing a magnesium hydrocarbyloxy compound of formula $Mg(OR_1)_{2-n}(R_1)_n$ (I), wherein $R_1$ is as defined above; and $0 \leq n < 2$, is prepared first:

by contacting, in a hydrocarbon solvent (e.g. heptane), a compound of formula $Mg(R_1)_2$ (IV), wherein $R_1$ is as defined above under formula (I), e.g. each $R_1$ is independently methyl, ethyl, propyl, butyl, pentyl, hexyl, heptyl or octyl, e.g. di(n-butyl) magnesium, n-butyl sec-butyl magnesium, butyl ethyl magnesium or butyl octyl magnesium, preferably

butyl octyl magnesium (BOMAG);

with an alcohol of formula $R_1OH$, wherein $R_1$ is as defined above under formula (I), suitably a cycloalkyl, cycloalkylalkyl, aryl, alkylaryl, arylalkyl or alkyl, each containing from 2 to 15, preferably from 3 to 10 carbon atoms. Preferably $R_1$ is a $C_{3-15}$ cycloalkyl or branched or unbranched $C_{3-15}$ alkyl, preferably a $C_{4-10}$ cycloalkyl or a branched or unbranched $C_{4-10}$ alkyl, such as cyclopentanol, 2-methyl-2-propanol, 2-ethyl-1-butanol, 2-methyl-1-pentanol, 2-ethyl-pentanol, 2-ethyl-1-hexanol, n-heptanol, n-octanol and decanol, preferably 2-ethyl-1-hexanol. The alcohols which are usable to transform the magnesium hydrocarbyl to a magnesium hydrocarbyloxy complex soluble in a hydrocarbon solvent, are known in the art or can be readily determined by a skilled person. Said contact is effected in a temperature between 0 and 100 °C, preferably at 10 to 40 °C, e.g. at 20 to 30 °C. The reaction can be completed by heating the system at 50 to 100 °C for 10 to 100 min. Preferably the alcohol is added to the Mg solution. The molar ratio of Mg dihydrocarbyl to $R_1OH$ ($Mg:R_1OH$) is preferably from 1:1 to 1:4, more preferably 1:1 to 1:3.5, e.g. 1:1.5 to 1:3.5, especially 1:1.8 to 1:3.1.

The solution (2) of the halogen-containing compound is prepared by dissolving in a hydrocarbon solvent as defined above (e.g. toluene) a compound of formula

$$Al(R_2)_mX_{3-m} \qquad (II),$$

wherein each $R_2$ is independently as defined above, preferably an alkyl of up to 6, such as up to 4, carbon atoms; and each X is independently a halogen, such as chlorine; and x may of may not be an integer $0 \leq m < 3$; e.g. dimethyl aluminium chloride, diethyl aluminium chloride, diisobutyl aluminium chloride, ethyl aluminium dichloride and methyl aluminium dichloride, preferably ethyl aluminium dichloride (EADC). Such solutions may also be commercially available, whereby they may be further diluted, if desired, with a solvent as defined above.

The prepared reaction mixture (1), i.e. Mg-hydrocarbyloxy-containing solution (1), is then added slowly to the obtained Al solution (2).

It has been found that in order to achieve beneficial properties of the support material, the obtained solid reaction product should be recovered from the reaction mixture of solution (1) and (2) before the use as a support.

The recovery step can be effected in various ways including the separation of the solid reaction product from the liquid reaction medium, e.g. by filtration, decantation or suction, and washing the solid product with a wash solution e.g. in a manner known in the art, before it is used as a support material.

It is evident for a skilled person that the washing efficiency can be varied within the scope of the invention depending on the desired washing effect and can be controlled e.g. by the number of the washing steps, the temperature, the solvent(s) used for washing, the amount of the wash solution and the washing time. The wash temperature can be e.g. 0 to 100 °C, suitably 20 to 100 °C, e.g. 40 to 80 °C, such as 55 - 70 °C. Thus the duration of a washing (e.g. the mixing time of the slurry in a wash solution) depends on the desired effect and can be chosen accordingly. The washing effect depends on the separation efficiency of the solid material from the solution.

Ad Solutions of the Starting Compounds:

The term "solution" is understood herein broadly to include solutions prepared from (a) one or more of the support forming compounds in liquid form (liquid at the room temperature or a melt prepared at a higher temperature) and/or (b) from an organic solvent(s).

The solutions are suitably formed using an organic solvent that dissolves the compounds. Preferred solvents include inert hydrocarbons, e.g. linear or branched aliphatic, alicyclic or aromatic $C_{5-20}$ hydrocarbons, preferably $C_{6-12}$ hydrocarbons, wherein the ring systems may contain hydrocarbon, e.g. $C_{1-6}$ alkyl substituents, such as cyclohexane, hexane, heptane, octane or toluene, or any mixtures thereof. E.g. linear or branched alkanes, e.g. hexane, heptane or octane, may be used.

Ad Wash Solution:

As the wash solution, e.g. any organic solvent or mixtures thereof known in the art can be used. Preferable solvents include hydrocarbons as defined above, e.g. pentane, hexane or heptane, particularly heptane.

Further treatment steps of the solid reaction product may also be possible after the combination of solutions (1) and (2) (i.e. after the precipitation reaction) before or during the recovery step of the invention. Such treatment includes e.g. a heating step of the reaction mixture after the solidification at an elevated temperature, e.g. up to 100 °C, such as 40 to 80 °C, suitably 50 to 75 °C, for a suitable period of time, such as from 5 minutes to 24 hours, e.g. 10 to 720 minutes, such as 20 to 360 minutes, before the recovery step.

In a preferable embodiment, the molar ratio of aluminium to magnesium in the catalyst support material of the

invention is at least 0.3 (≥ 0.3). Preferably the molar ratio of aluminium to magnesium is at least 0.4 (≥ 0.4), or preferably at least 0.5 (≥ 0.5), or at least of 0.6 (≥ 0.6). Said ratios result in a catalyst with very good morphology and reduced amount of fines content of the produced polymer product. In a further embodiment of the invention said molar ratio may be even at least 0.7 (≥ 0.7) or 0.80 (≥ 0.80), such as 0.85 (≥ 0.85), depending on the properties desired for the catalyst. In principle, the upper limit of said ratio range is not limited, but may be e.g. 1.1. In one preferred embodiment said upper limit of said molar ratio is 0.99. The above-said molar ratio can be determined in a known manner, e.g. using flame atomic absorption method with e.g. a nitrous oxide/acetylene flame.

The molar ratio of aluminium to magnesium in the support material is adjusted to a desired range by means of the recovery step of the invention, i.e. by separating the solids from the liquid reaction medium and by washing the solids as described above. Particularly, the obtained solid reaction product is washed with a wash solution, and the washing procedure can be repeated, if needed, until the desired ratio is obtained. The ratio can be monitored between the washings, if needed, e.g. by analysing the support samples in a conventional manner the relevant contents of the reaction product or the reaction medium, e.g. the mol-% of Mg and the mol-% of Al in the formed carrier material.

After the recovery step of the invention, the solid reaction product can be used as a support material for further catalytically active compounds, such as vanadium and titanium to form a final polymerization catalyst component, such as the solid ZN-procatalyst used according to the invention.

Accordingly, in the method for preparing the solid Ziegler-Natta procatalyst of the invention, the catalyst support, prepared as described above, is suspended in an organic solvent and treated with a vanadium compound and a titanium compound. The treatment step is preferably effected in a manner known in the art.

The vanadium compound employed for the preparation of the procatalyst is soluble in the liquid hydrocarbon and is, in general, a compound in which the vanadium has its maximum valency, that is to say valency 4, or else those in which the vanadyl group VO has its maximum valency, that is to say valency 3. The vanadium compound employed may be a compound which has either of the two general formulae $V(OR)_{4-m}X_m$ or $VO(OR)_{3-n}X_n$ in which formulae R denotes an alkyl group containing from 1 to 12 carbon atoms, X a halogen atom, such as bromine or chlorine, m an integral or fractional number ranging from 0 to 4 and n an integral of fractional number ranging from 0 to 3. Advantageously, one or more compounds can be employed, chosen from vanadium tetrachloride, vanadyl trichloride, vanadyl tri-n-propoxide, vanadyl triisopropoxide and vanadium tetra-n-propoxid.
Preferably vanadium tetrachloride is used.

The titanium compound employed for the preparation of the procatalyst is also soluble in the liquid hydrocarbon and is, in general, a compound in which the titanium has its maximum valency, that is to say valency 4. The titanium compound employed may be a compound of the general formula $Ti(OR)_{4-p}X_p$ in which formula R denotes an alkyl group containing from 1 to 12 carbon atoms, X a halogen atom, such as bromine or chlorine, and p an integral or fractional number ranging from 0 to 4. Among these compounds, titanium tetrachloride or titanium tetraisopropoxide can be employed
Preferably titanium tetrachloride is used.

The quantity of vanadium and titanium compound which are employed to prepare the procatalyst is in particular such that the mole ratio of V:Ti is from 10:90 to 90:10, preferably from 25:75 to 75:25 and more preferably 40:60 to 60:40. If it is referred to e.g. a 40/60% V/Ti catalyst, this means therefore 40/60 mol/mol V/Ti in the catalyst preparation step and not in the final catalyst.

Generally, in the final solid procatalyst particles, the molar ratio of Mg:(V+Ti) can be e.g. between 10:1 to 1:10, preferably less than 6:1, such as between less than 6:1 and 1:1.
The molar ratio of (V+Ti):Al can be e.g. between 10:1 to 1:2, e.g. 5:1 to 1:1. The ratios can be determined in a manner known in the art.

The final procatalyst, e.g. the ZN procatalyst, thus obtained is combined with further catalyst component(s) conventionally used in the art, such as a cocatalyst (e.g. aluminium alkyl compounds) and optionally (internal) electron donors, additional activators and/or modifiers. Said further catalyst component(s) can be combined with the present procatalyst during the preparation method of the present procatalyst or during the actual polymerization step by adding the procatalyst of the invention and the further component(s) separately into a reactor. Preferably no internal electron donor is added.

Preferably the solid procatalysts have an average particles size in the range of 2 to 200 μm, more preferably from 5 to 150 μm and most preferably from 10 to 50 μm.

Ad cocatalyst:

The above described procatalyst is combined with a cocatalyst so that it can be used in the polymerization process according to the invention.
The cocatalyst is an organometallic compound of formula (III)

$(RO)_z$
|
$R_y$-Al-$Cl_x$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer;

Examples of suitable cocatalysts are:

Aluminium alkyls (x and z = 0; y = 3) like trimethyl aluminium, triethyl aluminium, triisobutylaluminium, tri-n-octyl aluminium and isoprenyl aluminium. Especially triethylaluminium and/or triisobutylaluminium are preferred.

Aluminium alkyl halides ($z = 0$; $0 < x \leq 2$; $1 \leq y < 3$) like diethyl aluminium chloride, ethyl aluminium dichloride, dipropyl aluminium chloride, propyl dibutyl aluminium chloride, butyl aluminium dichloride, methyl aluminium dichloride, dimethyl aluminium chloride

Aluminium alkoxy compounds ($0 < z \leq 2$, $x = 0$; $1 \leq y < 3$) like diethyl aluminium ethoxide, diethyl aluminium propoxide, ethyl aluminium diethoxide, dipropyl aluminium ethoxide, di (iso)butyl aluminium ethoxide, (iso)butyl aluminium diethoxide, methyl aluminium propoxide, dimethyl aluminium ethoxide, or any combinations of alkyl and alkoxy groups.

Alternatively, the cocatalyst may be a mixture of compounds selected from the group consisting of tri-$C_1$-$C_{10}$ alkyl aluminium compounds, where one of the components comprises short-chained alkyl groups (1 - 3 carbon atoms) and the other component comprises long-chained alkyl groups (4 - 20 carbon atoms). Examples of suitable aluminium alkyls comprising short-chained alkyl groups are trimethyl aluminium and in particular, triethyl aluminium. Examples of suitable components comprising long-chained alkyl groups are tri-n-octyl aluminium and in particular isoprenyl aluminium. In particular, the cocatalyst is a mixture of isoprenyl aluminium and triethyl aluminium or isoprenyl aluminium and trimethyl aluminium.

In the ZN polymerization catalyst system used according to the present invention, the molar ratio between the aluminium in said cocatalyst and the vanadium+titanium of said procatalyst is preferably 1:1 - 100:1, more preferably 2:1 - 50:1 and most preferably 3:1 - 20:1.

The procatalyst and the cocatalyst may be contacted with each other prior to their introduction into the polymerization reactor. However, it is equally well possible to introduce the two catalyst components separately into the reactor.

It should be further mentioned that the special vanadium-containing Ziegler-Natta catalyst used according to the invention does not need any kind of promoter (like halogenated hydrocarbons). As is known from the state of the art common vanadium-containing catalyst compositions include as an essential feature a promoter (like halogenated hydrocarbons) in order to increase the stability of these catalyst compositions.

A further embodiment of the present invention is the use of a solid Ziegler-Natta catalyst system comprising:

1) a solid procatalyst formed by contacting at least:

a) a Mg-alcoholate complex of the formula (I):
$Mg(OR_1)_{2-n}(R_1)_n$, wherein each $R_1$ independently represents a $C_1$-$C_{20}$ hydrocarbyl group and $0 \leq n < 2$ and may or may not be an integer;
b) an aluminium compound of the formula (II)
$Al(R_2)_mX_{3-m}$, wherein each $R_2$ independently represents an alkyl of up to 6 carbon atoms; each X is independently a halogen; $0 \leq m < 3$ and m and may or may not be an integer
c) a vanadium compound and a titanium compound in portions such as to provide a molar ratio of V:Ti from 10:90 to 90:10
in order to yield the solid procatalyst and

2) one or more organometallic cocatalyst(s) of the formula (III)

$(RO)_z$
|
$R_y$-Al-$Cl_x$

wherein each R is independently a $C_1$-$C_{20}$-alkyl group, $0 \leq x \leq 2$; $1 \leq y \leq 3$; $0 \leq z \leq 2$ and $x + y + z = 3$; x, y and z may or may not be an integer,

in a multi-stage polymerization process to produce a multi-modal polyethylene composition with a density according to ISO 1183 of 900 to 980 kg/m$^3$,
whereby the process shows a reduced change of comonomer response with polymerization time compared to multi-stage processes using Ziegler-Natta catalysts with 100wt% Ti.

Ad Polymerization process:

The catalyst system hereinbefore described is according to the invention employed in a multi-stage, preferably two-stage polymerization process. In such a polymerization process the reactors are connected in series such that the products of one reactor are used as the starting material in the next reactor, with optional comonomer addition preferably in only the reactor(s) used for production of the higher/highest molecular weight component(s) or differing comonomers used in each stage.
A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage. The polymerization reactions used in each stage may involve conventional ethylene homo-polymerization or copolymerization reactions, e.g. gas-phase, slurry phase, liquid phase polymerizations, using conventional reactors, e.g. loop reactors, gas phase reactors, batch reactors, e.t.c..
The polymerization may be carried out continuously or batch wise, preferably the polymerization is carried out continuously.

The polymer product of the first stage may be passed on to the subsequent (i.e. second) reactor on a continuous, semi-continuous or batch-wise basis.

The process according to the invention comprises preferably at least the steps of

(i) polymerizing in a first slurry phase stage ethylene monomers and optionally one or more alpha-olefine comonomers, in the presence of a Ziegler-Natta polymerization catalyst system to obtain a first polyethylene fraction component (A)
(ii) polymerizing in a second gas or slurry phase stage ethylene monomers and one or more alpha-olefine comonomers, in the presence of a Ziegler-Natta polymerization catalyst system to obtain a second polyethylene fraction component (B),

one of fraction component (A) or (B) being the lower molecular weight component of the polyethylene, the other being the higher molecular weight component of the polyethylene,
wherein the second polymerization step is carried out in the presence of the polymerization product of the first polymerization step.

If fraction component (A) is the lower molecular weight component of the bimodal polyethylene and fraction component (B) thus being the higher molecular weight component of the bimodal polyethylene, this is called normal mode.
On the contrary, if fraction component (A) is the higher molecular weight component of the bimodal polyethylene and thus fraction (B) being the lower molecular weight component of the bimodal polyethylene, this is called reverse mode.

In the normal mode operation preferably the first stage is carried out in the slurry phase and produces a lower molecular weight component and the second stage is carried out in a gas phase and produces a higher molecular weight component. In a preferred polymerization process one slurry phase stage is followed by one gas phase stage.
In the reverse mode the higher molecular weight component is produced in the first stage (slurry) and the lower molecular weight component is produced in the second stage (gas phase).

However, the most preferred mode is "normal mode".

More preferably the production of fractions (A) and (B) is carried out as a combination of slurry polymerization for fraction (A) and gas phase polymerization for fraction (B).

Thus the first stage is carried out in the slurry phase and produces preferably the lower molecular weight component. The second stage can be carried out in a gas phase or in a slurry phase, but is preferably carried out in the gas phase. Preferably the second stage produces the higher molecular weight component. In a preferred polymerization process one slurry phase stage is followed by one gas phase stage.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186

and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

Optionally the process according to the invention can comprise one or two additional polymerization steps. These optional one or two additional polymerization steps preferably comprise gas phase polymerization steps.

The reactor system may additionally comprise other reactors, e.g. for pre-polymerization. Pre-polymerization may be used, for example, to provide the catalyst in a solid particulate form or to activate the catalyst. In a typical pre-polymerization, monomer (e.g. ethylene) is polymerized with catalyst, as hereinbefore described, to yield, for example, 0.1 to 1000 g polymer per gram of catalyst. The polymer formed during pre-polymerization forms less than 10 % by weight, preferably less than 7 % by weight, typically less than 5 % by weight of the total weight of the final polymer. Still more preferably only 2-3 % of the total weight of the polymer is formed during any pre-polymerization step. A pre-polymerization is therefore not intended to represent one of the stages of the two-stage polymerization process hereinbefore described.

In a preferred method of the invention a bimodal polyethylene is produced in a two-stage process, whereby fraction (A) produced in the first stage comprises 25 to 85% by weight, preferably 30 to 75%, by weight of the total weight of the final polymer and is the LMW component. This lower molecular weight component can contain some comonomer so that polymer density can be regulated (in first stage) from 970 to 935.

The polymerization medium typically comprises ethylene, a diluent and catalyst as hereinbefore described. The diluent used will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator. In a typical slurry phase polymerization the temperature is preferably in the range 40 to 110 °C, preferably 60 to 100 °C, in particular 85 to 100°C. The reaction pressure is typically 10 to 150 bar, preferably 15 to 100 bar.

In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture. When propane is used as a diluent an example of a suitable operating temperature is 95 °C and pressure 60 bar when employing supercritical conditions.

Polymerization in the first reactor (e.g. a loop reactor) is typically carried out for 10 to 300 minutes, preferably 20 to 120 minutes.

At least part of the volatile components of the reaction medium (e.g. hydrogen) may then be removed. The product stream is then subjected to a second polymerization stage.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

The second polymerization is preferably carried out using the same catalyst as hereinbefore described in the first stage (i.e. no fresh catalyst is added in the second stage).

In the second polymerization stage for producing the bimodal polyethylene preferably the HMW component of the bimodal polymer is produced. The second stage is preferably carried out in the gas phase. The polymer produced in the second stage is a copolymer. The polymer produced in the second stage comprises 15 to 75%, preferably 25 to 70% by weight of the total copolymer composition (i.e. the LMW:HMW component weight ratio is preferably 85:15 to 25:75, preferably 75:25 to 30:70).

As gas phase reactors preferably fluidized bed gas phase reactors, fast fluidized bed gas phase reactors or settled bed gas phase reactors can be used.

Ad fluidized bed gas phase reactors:

In a fluidized bed gas phase reactor an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer (s), eventual chain growth controllers or chain transfer agents, such as hydrogen, and eventual inert gas.

The fluidization gas passes through the fluidized bed. The superficial velocity of the fluidization gas must be higher that

minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

The reactor may also include a mechanical agitator to further facilitate mixing within the fluidized bed. An example of suitable agitator design is given in EP-A-707513.

Ad fast fluidized bed reactor:

In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles.

Ad settled bed reactor:

In the settled bed the polymer flows downward in a plug flow manner in an environment containing reactive components in gaseous phase. The polymer powder is introduced into the bed from the top from where it flows downwards due to gravity.

Polymerization in settled bed is disclosed, among others, in EP-A-1633466, EP-A-1484343 and WO-A-97/04015.

In the process according to the invention preferably a fluidized bed gas phase reactors is used for the second polymerization step.

For gas phase reactors, the reaction temperature used will generally be in the range 60 to 115 °C (e.g. 70 to 110 °C), the reactor pressure will generally be in the range 10 to 30 bar, and the residence time will generally be 0.5 to 8 hours. Preferably the residence time in the gas phase reactor is 1 to 4 hours, more preferably 1.5 to 3 hours.

The polymerization medium in the second stage typically comprises ethylene, comonomers (e.g. 1-butene, 1-hexene, or octene), nitrogen, propane and optionally hydrogen.

The properties of the fractions produced in the second step of the two-stage process can either be inferred from polymers, which are separately produced in a single stage by applying identical polymerization conditions (e.g. identical temperature, partial pressures of the reactants/diluents, suspension medium, reaction time) with regard to the stage of the two-stage process in which the fraction is produced, and by using a catalyst on which no previously produced polymer is present. Alternatively the properties of the second component can be derived from an analysis of the LMW component and the final polymer. Such calculations can be carried out using various techniques, e.g. K. B. McAuley: Modelling, Estimation and Control of Product Properties in a Gas Phase Polyethylene Reactor. Thesis, McMaster University, August 1991 . or K. McAuley and J. McMacGregor, AIChE Journal, Vol. 37, no. 6, pages 825 - 835 . B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13 . In addition, subtracting GPC curves, when fractions of each polymer are known is possible.

Thus, although not directly measurable on the two-stage process products, the properties of the fractions produced in the second stage of such a two-stage process can be determined by applying either or both of the above methods. The skilled person will be able to select the appropriate method.

In a preferred embodiment, the HMW fraction is an ethylene copolymer which has preferably a density of at least 860 $kg/m^3$, a preferred density range being 890 to 940 $kg/m^3$, preferably to 920 $kg/m^3$.

If the process according to the invention comprises one or two additional polymerization steps, these steps are preferably performed in gas phase reactors, as described above.

Any combination of gas phase reactors can be used.

For example, the polymerization product of the second polymerization step, which is either a fluidized bed polymerization step or a fast fluidized bed polymerization step, preferably a fluidized bed polymerization step is transferred into a third polymerization reactor, which is for example a settled bed polymerization reactor. The product from the third polymerization step is optionally transferred into a fourth reaction step, which uses for example again a fluidized bed polymerization reactor. From the fourth reaction reactor the polymer is recovered and sent to further processing.

The use of two or three subsequent fluidized bed polymerization reactors is a further possibility.

In any embodiment it is possible to feed additional catalyst components into any of the reaction zones respectively polymerization step. However, it is preferred that the solid catalyst component is introduced into the prepolymerization step only and that no fresh solid catalyst component is added into any reaction zone respectively polymerization step. Thus, the solid catalyst component entering a polymerization step comes from the preceding polymerization step (s) only. However, additional cocatalyst and/or electron donor can be introduced into the reaction stages if necessary. This may be done, for instance, to increase the activity of the catalyst or to influence the isotacticity of the polymer.

The final polymer can have a co-monomer content of up to 10 wt %. If the polymer is produced in a two stage process, the amount of comonomer in the polymer produced in the second stage can be calculated based on the final amount present in the polymer, the amount in the polymer produced in the first stage and on the production split between the first and second stages.
The comonomers which can be employed in both stages in the present invention include $C_{3-12}$ alpha olefins, preferably selected from but-1-ene, hex-1-ene, 4-methyl-pent-1-ene, hept-1-ene, oct-1-ene, and dec-1-ene, more preferably but-1-ene and hex-1-ene. Preferably hexene or butene, or a mixture of hexane is used.

The final polyethylene composition produced according to the invention preferably has a $MFR_5$ of 0.02 to 10 g/10 min, more preferably 0.05 to 6 g/10min, as measured according to ISO 1133 at 190°C under a 5 kg load.
A preferred final ethylene polymer composition is also that having a $MFR_{21}$ of 1 to 100, preferably 1.5 to 60 g/10 min , as measured according to ISO 1133 at 190°C under a 21.6 kg load.

The ethylene polymer produced by the method of the current invention preferably is a bimodal polyethylene, preferably having a density of 900 to 980 kg/$m^3$, more preferably 915 to 970 kg/$m^3$, most preferably 920 to 960 kg/$m^3$.

The bulk density of polymer powder, determined according to ASTM D1895-96, method A, of the LLDPE according to the invention is above 260, preferably above 290 kg/$m^3$.

The polymer of the present invention may also comprise conventional additives such as antioxidants, UV stabilisers, acid scavengers, anti-blocking agents, polymer processing agent etc. The amounts of these compounds may be readily determined by those skilled in the art. These may be added to the polymer using conventional techniques.

The process according to the invention shows an improved overall comonomer conversion compared to processes using conventional ZN polymerization catalyst compositions. Due to this improved comonomer conversion lower densities can be achieved with lower comonomer feed(s) and -concentrations, both in a loop and a gas phase reactor. This is very advantageously since it is known that very high comonomer concentrations in the polymerization process often dissolves some catalyst components, swells polymer particles and causes tendency for cheating and chunking. Thus, the process according to the invention shows improved operability and avoids reactor fouling.

With the process according to the invention more constant comonomer response in respect to polymerization time is achieved, thus allowing the production of products having also lower density.

In addition, as a result of the invention more homogeneous final polyethylene product is obtained compared to products produced by conventional ZN polymerization catalyst compositions. In the bimodal polyethylene produced according to the invention there are less agglomerated gel components formed by particles producing very HMW polymer components. Thus excellent homogeneity is achieved.

The polymers produced according to the method of the present invention may be used to manufacture articles such as films and pipes. The polymers may, for example, be used be used to form a complete film or a layer of a multilayer film. The film may be produced by any conventional technique known in the art, e.g. blowing or casting. Films made using the polymer of the invention exhibit high dart impact strengths and a low number of gels.

Pipes may be made from the polymers produced according to the present invention by any conventional technique, e.g. extrusion. As already mentioned the inclusion of the LMW component in the polymer enhances process ability, whilst the narrower MWD of the polymer as a whole (largely due to the avoidance of a low molecular weight tail on the HMW component) ensures that pipes can withstand high pressures.

## 1. Definitions and Measurement Methods

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer and the molecular weight. The MFR is determined at 190°C for polyethylene. It may be determined at different loadings such as 2.16 kg ($MFR_2$), 5 kg ($MFR_5$) or 21.6 kg ($MFR_{21}$).

### Molecular weights, molecular weight distribution (Mn, Mw, MWD) - GPC

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPC2000 instrument, equipped with heated flow cell (at 140 °C) connected via a heated transfer line (at 140 °C) was used with 2 x Olexis and 1x Olexis Guard columns from Polymer Laboratories and 1,2,4-trichlorobenzene (TCB) as solvent at 140 °C and at a constant flow rate of 1 mL/min. The heated flow cell is mounted on a sample plate located in a Perkin Elmer Spectrum 100 equipped with a MCT detector. The MCT detector is cooled with liquid nitrogen. During the chromatographic run a series of FTIR spectra is collected using the Perkin Elmer TimeBase

V3.0 software. The spectrometer settings were 16 accumulations, scan range from 3000 cm-1 to 2700 cm-1, resolution 8 cm-1. A background spectrum taken under GPC run conditions is substracted from each spectrum collected during the chromatographic run. 423.5 μL of sample solution were injected per analysis. The column set was calibrated using universal calibration (according to ISO 16014-2:2003) with at least 15 narrow MWD polystyrene (PS) standards in the range of 0.6 kg/mol to 6 000 kg/mol. Mark Houwink constants for PS, PE and PP used are as per ASTM D 6474-99. All samples were prepared by dissolving 4.0 - 8.0 mg of polymer in 4 mL (at 140 °C) of stabilized TCB (stabilized with 250 mg/L 2,6-Di tert butyl-4-methyl-phenol) and keeping for max. 3 hours at max 160°C with continuously gentle shaking prior sampling into the GPC instrument. The spectral data as recorded by Perkin Elmer TimeBase 3.0 software is imported into Polymer Laboratories Cirrus V3.1 software and the evaluation towards molecular weights and molecular weight distribution was performed with this software.

**Density** was determined according to ISO 1183 on compression-moulded specimens.

**Bulk Density** was determined according to ASTM D1895-96, method A, by filling a container with known volume (100ml) with polymer powder and measuring the weight of polymer. Bulk density is calculated as $kgPE/m^3$

**Comonomer content** of the obtained products was measured in a known manner based on Fourier transform infrared spectroscopy (FTIR) calibrated with $^{13}C$-NMR, using Nicolet Magna 550 IR spectrometer together with Nicolet Omnic FTIR software.

**Elemental analysis of the catalysts**

The elemental analysis of the catalysts was performed by taking a solid sample of mass, M, cooling over dry ice. Samples were diluted up to a known volume, Vol, by dissolving in nitric acid ($HNO_3$, 65 %, 5 % of Vol) and freshly deionised (DI) water (95 % of Vol), the samples were left to stabilise for two hours.

The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ in DI water), a low standard (10 ppm Al in a solution of 5 % $HNO_3$ in DI water, a high standard (100 ppm Mg, 50 ppm Al, 50 ppm Ti and 50 ppm V in a solution of 5 % $HNO_3$ in DI water) and a quality control sample (50 ppm Mg, 20 ppm Al, 20 ppm Ti and 20 ppm V in a solution of 5 % $HNO_3$ in DI water).

The content of aluminium was monitored via the 167.081 nm line, when Al concentration in ICP sample was between 0-10 ppm and via the 396.152 nm line for Al concentrations between 10-100 ppm. The magnesium concentration was monitored via the 285.213 nm line and the titanium content via the 323.452 nm line.

The content of vanadium was monitored using an average from the 292.402 nm and 310.230 nm lines.

The reported values, required to be between 0 and 100, or further dilution is required, are an average of three successive aliquots taken from the same sample and are related back to the original catalyst using equation 1.

$$C = (R \times Vol)/M \qquad \text{Equation 1}$$

Where:

C is the concentration in ppm, related to % content by a factor of 10,000
R is the reported value from the ICP-AES
Vol is the total volume of dilution in ml
M is the original mass of sample in g

If dilution was required then this also needs to be taken into account by multiplication of C by the dilution factor.

**Example 1: Catalyst preparation:**

**a) Preparation of the Mg-alcoholate complex**

The Mg-alcoholate was prepared in a larger batch. About 24 kg of the Mg-alcoholate complex was produced. The Mg-alcoholate complex synthesis was started by adding 16.0 kg (472 g Mg, 19.42 mol Mg) of 20 % heptane solution of $(C_4H_9)_{1,5}Mg(C_8H_{17})_{0,5}$ (BOMAG, 2.95 % Mg) into a multi purpose reactor at room temperature. To this solution 4.92 kg (37.79 mol) of 2-ethyl-hexanol (EHA) was added slowly at room temperature. The Mg/EHA molar ratio in this mixture was 1:1.945. The temperature was held at about room temperature and the reactants were allowed to react with each other for 108 min. 3.75 kg (52.1 mol) of n-pentane was added at room temperature to reduce viscosity and the Mg-alcoholate complex was allowed to stabilise for 120 min at 20 - 30 °C. After this the Mg-alcoholate solution was allowed

to temperate back to room temperature. Analyses showed that the Mg-alcoholate complex had a concentration of 2.4 % Mg.

**b) Preparation of the $MgCl_2$ support material**

25 ml of heptane ($C_7$) was first added to a 250 ml glass reactor. Then 38.2 g of a 20 w% pentane solution of EADC was added. Afterwards a Mg-complex solution, as prepared above, was added drop by drop with a syringe during 45 min into the reaction solution at room temperature in a molar proportion of 1:1 referring to EADC. The Mg/Al molar ratio in this mixture was about 2:1. After this the temperature was adjusted to 75 °C and the reactants were allowed to react with each other. After reaction, the precipitate was allowed to settle for 30 min and then the liquid was siphoned off and the support washed twice with heptane at 60°C. The wash solution was then siphoned off. The support-heptan slurry had a Mg content of 1.06 wt%.

**Catalyst A**

Catalyst A was prepared by taking 10 g of the previously prepared support material into a vessel provided with a mixing device. In a separate vessel 0.06 ml of $VCl_4$ and 0.18 ml of $TiCl_4$ were mixed and then added in the vessel with the support in heptane. The Mg/(V + Ti) molar ratio was 2:1. The slurry was mixed over night at room temperature. After this the catalyst was separated from the heptane liquid and washed twice with 5 ml portions of heptane and then dried for one hour under a stream of nitrogen.

**Comparative Example 1: Catalyst B:**

The catalyst B was prepared by taking 10 g of the previously prepared support material into a vessel provided with a mixing device. 0.24 ml of $TiCl_4$ was added to the vessel with the support slurry. The Mg/Ti molar ratio was 2:1. The slurry was mixed for four hours at room temperature. After this the catalyst was separated from the heptane liquid and washed twice with 5 ml portions of heptane and then dried for one hour under a stream of nitrogen.

**Example 2: Slurry polymerization**

**First stage: Polymerization of ethylene to produce the LMW component (batch slurry polymerization):**

A 5 litre autoclave reactor was used. 1300 g of propane was introduced into the reactor as reaction medium. 27.3 bar of $H_2$ pressure was added from 560 ml feed vessel into the reactor. The temperature of the reactor system was set to 85°C and the catalyst (prepared according to the method described above) and the co-catalyst were fed into the reactor by means of two feed vessels that were connected in line to the reactor lid. Catalyst A was added into the upper feed vessel together with 3 ml of pentane. The co-catalyst (TIBA) was added to the lower feed vessel with Al/Ti molar ratio of 10 mol/mol. The catalyst and co-catalyst were added into the reactor by automatic feeding system utilising propane flush. The polymerization was started by opening the ethylene feed line through the premixing chamber. Target ethylene partial pressure was 3.5 bar. A pressure of about 44.5 bar was maintained by the ethylene feed trough out the polymerization. The polymerization was carried out at 85°C for 60 min after which it was stopped by venting off the monomer and propane. The amount of produced polymer in first stage was 207 g and it was estimated from the ethylene mass flow meter. Polymer properties after slurry polymerization are listed in table 1.

**Comparative example 2: Slurry polymerization**

**First stage: Polymerization of ethylene to produce the LMW component (batch slurry polymerization).**

A 5 litre autoclave reactor was used. 1300 g of propane was introduced into the reactor as reaction medium. 27.3 bar of $H_2$ pressure was added from 560 ml feed vessel into the reactor. The temperature of the reactor system was set to 85°C and the catalyst (prepared according to the method described above) and the co-catalyst were fed into the reactor by means of two feed vessels that were connected in line to the reactor lid. Catalyst B was added into the upper feed vessel together with 3 ml of pentane. The co-catalyst (TIBA) was added to the lower feed vessel with Al/Ti molar ratio of 10 mol/mol. The catalyst and co-catalyst were added into the reactor by automatic feeding system utilising propane flush. The polymerization was started by opening the ethylene feed line through the premixing chamber. Target ethylene partial pressure was 3.5 bar. A pressure of about 44.5 bar was maintained by the ethylene feed trough out the polymerization. The polymerization was carried out at 85°C for 60 min after which it was stopped by venting off the monomer and propane. The amount of produced polymer in first stage was 187 g. Polymer properties after slurry

polymerization are listed in table 1.

**Table 1: Polymer properties after slurry polymerization**

| | Example 2 | Comparative example 2 |
|---|---|---|
| Catalyst | A | B |
| Catalyst amount (mg) | 31.8 | 21.1 |
| Yield (g) | 207 | 187 |
| Activity (kg/gCat/h) | 6.51 | 8.86 |
| Mn | 5 670 | 9240 |
| Mw | 48500 | 61200 |
| MWD | 8.5 | 6.6 |
| Bulk Density (kg/$m^3$) | 328 | 334 |
| Density (kg/$m^3$) | 969 | 970.4 |
| Comonomer Content (wt%) | 0 | 0 |
| $MFR_2$ (g/10min) | 30.3 | 22.7 |
| $MFR_5$(g/10min) | 92.1 | 71.4 |
| $MFR_{21.6}$ (g/10min) | 1010 | 802.1 |

**Example 3**

First stage was performed as described in Example 2. Estimated (from ethylene mass flow meter) polymer amount was 195 g

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 11.9 g. At 85°C the polymerization and data collection was started again. Partial pressure of ethylene was 2 bar. A pressure of about 30.1 bar was maintained by the ethylene feed trough out the test polymerization. The co-polymerization was continued for 30 minutes. The polymerization was stopped by venting off the monomer, comonomer and nitrogen. The total yield of polymer was 239 g (44 g produced in GP). More detailed results from these polymerizations are listed in Table 2.

**Example 4**

First stage was performed as described in Example 2. Estimated (from ethylene mass flow meter) polymer amount was 222 g.

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 17.7 g. At 85°C the polymerization and data collection was started again. Partial pressure of ethylene was 2 bar. A pressure of about 30.1 bar was maintained by the ethylene feed trough out the test polymerization. The co-polymerization was continued for 90 minutes. The polymerization was stopped by venting off the monomer, comonomer and nitrogen. The total yield of polymer was 313 g (91 g produced in GP). More detailed results from these polymerizations are listed in Table 2.

**Example 5:**

First stage was performed as described in Example 2. Estimated (from ethylene mass flow meter) polymer amount was 206 g.

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 26.1 g. At 85°C the polymerization and data collection was started again. Partial pressure of ethylene was 2 bar. A pressure of about 30.1 bar was maintained by the ethylene feed trough out the test polymerization. The co-polymerization was continued for 120 minutes. The polymerization was stopped by venting off the monomer, comonomer and nitrogen. The total yield of polymer was 345 g (139 g produced in GP). More detailed results from these polymerizations are listed in Table 2.

**Example 6**

First stage was performed as described in Example 2. Estimated (from ethylene mass flow meter) polymer amount was 208 g.

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 27.4 g. At 85°C the polymerization and data collection was started again. Partial pressure of ethylene was 2 bar. A pressure of about 30 bar was maintained by the ethylene feed trough out the test polymerization. The co-polymerization was continued for 180 minutes. The polymerization was stopped by venting off the monomer, comonomer and nitrogen. The total yield of polymer was 347 g (139 g produced in GP). More detailed results from these polymerizations are listed in Table 2.

**Example 7**

First stage was performed as described in Example 2 but with a polymerization time of 30 min. Estimated (from ethylene mass flow meter) polymer amount produced was 132 g.

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 32.1 g. At 85°C the polymerization and data collection was started again. Partial pressure of ethylene was 2 bar. A pressure of about 30 bar was maintained by the ethylene feed trough out the test polymerization. The co-polymerization was continued for 150 minutes. The polymerization was stopped by venting off the monomer, comonomer and nitrogen. The total yield of polymer was 282 g (150 g produced in GP). More detailed results from these polymerizations are listed in Table 2.

**Example 8**

First stage was performed as described in Example 2 but with a polymerization time of 30 min. Estimated (from ethylene mass flow meter) polymer amount produced was 172 g.

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 36.3 g. At 85°C the polymerization and data collection was started again. Partial pressure of ethylene was 2 bar. A pressure of about 30 bar was maintained by the ethylene feed trough out the test polymerization. The co-polymerization was continued for 150 minutes. The polymerization was stopped by venting off the monomer, comonomer and nitrogen. The total yield of polymer was 379 g (207 g produced in GP). More detailed results from these polymerizations are listed in Table 2.

**Example 9:**

First stage was performed as described for Example 2 but with polymerization time of 30 min and 25.1g 1-hexene comonomer was added batch wise at the beginning of polymerization. Estimated polymer amount produced was 146 g (form ethylene mass flow meter).

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 42.4 g. At 85°C the polymerization and data collection was started again. Partial pressure of ethylene was 3 bar. A pressure of about 31 bar was maintained by the ethylene feed trough out the test polymerization. The co-polymerization was continued for 120 minutes. The polymerization was stopped by venting off the monomer, comonomer and nitrogen. The total yield of polymer was 447 g (301g produced in GP). More detailed results from these polymerizations are listed in Table 2.

**Comparative example 3**

First stage was performed as described in Comparative Example 2. Estimated polymer amount produced was 177 g (from ethylene mass flow meter).

**Second stage: Ethylene - hexene co-polymerization to produce the HMW component:**

The second stage in the polymerization was carried out in the same 5 l autoclave reactor as described above containing the previously prepared homo-polymer. After venting off the medium, hydrogen and monomer from the first stage, the reactor and polymer was purged with nitrogen 3 times. Then approximately 28 bar of nitrogen was introduced into the reactor as fluidizing medium. The continuous hexene ($C_6$") co-monomer feed was set to follow ethylene feed - total hexene consumption was 34.9 g. At 85°C the polymerization and data collection was started again. Partial pressure of ethylene was 2 bar. A pressure of about 30 bar was maintained by the ethylene feed trough out the test polymerization. The co-polymerization was continued for 120 minutes. The polymerization was stopped by venting off the monomer, comonomer and nitrogen. The total yield of polymer was 367 g (190 g produced in GP). More detailed results from these polymerizations are listed in Table 2.

Table 2: Bimodal polymerization with varying gas phase polymerization time:

| BIMODAL SLURRY/GPR | Catalyst A | | | | | | | Catalyst B |
|---|---|---|---|---|---|---|---|---|
| Example | 3 | 4 | 5 | 6 | 7 | 8 | 9 | Comparative Example 3 |
| Slurry (1st stage) | | | | | | | | |
| Time (min) | 60 | | | | 30 | | | 60 |
| Consumed ethylene (estimated from ethylene mass flow meter) (g) | 195 | 222 | 206 | 208 | 132 | 172 | 146 | 177 |
| GPR (2nd stage) | | | | | | | | |
| Time (min) | 30 | 90 | 120 | 180 | 150 | | 120 | 120 |
| Yield of polymer (g) | 239 | 313 | 345 | 347 | 282 | 379 | 447 | 367 |
| $C_6$ consumption (g) | 11.6 | 17.7 | 26.1 | 27.4 | 32.1 | 36.3 | 42.4 | 34.9 |
| $MFR_5$ [g/10min] (final) | 5 | 2.5 | 0.7 | 0.3 | 0.2 | 0.4 | 0.09 | 0.64 |
| $MFR_{21}$ [g/10min] (final) | 99.3 | 53.3 | 20.8 | 10.5 | 3.5 | 9.8 | 1.92 | 15.3 |
| Mw (final) | 119 000 | 128 000 | 153 000 | 172 000 | 283 000 | 240 000 | 319 000 | 177 000 |
| Mn (final) | 6 040 | 6 970 | 7 650 | 16 600 | 32 800 | 20 900 | 36 600 | 15 400 |
| MWD (final) | 19.6 | 20 | 18.4 | 10.3 | 8.6 | 11.5 | 8.7 | 11.5 |
| $C_6$ [wt%] (final) | 0.9 | 2.7 | 3.8 | 3.8 | 6.8 | 8 | 7.1 | 6 |
| Density [kg/m$^3$] (final) | 962.4 | 952.2 | 947.6 | 945 | 931 | 931.5 | 924 | 937.4 |
| Bulk density (final) | 325 | 330 | 370 | 330 | 320 | 300 | 380 | 219 |
| Calculated properties | | | | | | | | |
| Calculated yield of polymer in GPR (g) | 44 | 91 | 139 | 139 | 150 | 207 | 301 | 190 |
| Slurry fraction [wt%] | 82 | 71 | 60 | 60 | 47 | 45 | 33 | 48 |
| GPR fraction [wt%] | 18 | 29 | 40 | 40 | 53 | 55 | 67 | 52 |
| Calc. Density GPR (kg/m$^3$) | 932 | 911 | 915.5 | 909 | 897 | 901 | 902 | 906 |
| Calc. comonomer content in polymer produced in GPR (wt%) | 5 | 9.3 | 9.5 | 9.5 | 12.8 | 14.6 | 10.6 | 11.5 |
| Calc. $C_6$ conversion (%) (2nd stage) | 19 | 48 | 51 | 48 | 60 | 83 | 75 | 63 |

Calculations:

[1]
Calculated comonomer content in polymer produced in GPR = (100/ GPR fraction [wt%]) x $C_6$ [wt%] (final)
[2]
Calc. $C_6$ conversion (%) (2$^{nd}$ stage) = [(Calc. comonomer content in polymer produced in GPR)/100] x [Polymer amount (2$^{nd}$ stage)]/ $C_6$ consumption (g)
[3]
Calc. Density GPR (kg/m$^3$) = {[Density [kg/m$^3$] (final)] - [Slurry fraction [wt%]/100 x Density (kg/m$^3$) slurry]}/[ GPR fraction [wt%]/100]; Density (kg/m$^3$) slurry = 969 kg/m$^3$(see table 1)

From Table 2, it can be seen that the amount of comonomer incorporated in the gas phase reactor (the value had to be calculated using the overall amount of comonomer incorporated in the whole polymer and the split) for 90min, 120min and 180min is stable around 9 wt%. Also the comonomer conversion is very stable over long period of polymerization times (from 90 to 180 minutes).

Figure 1 shows the GPC curves for examples 2, 3, 4, 5 and 6. It can be seen that the amount of high molecular weight polymer (fraction B) was just increasing accoding to increased split (more GPR polymer was produced).

## Claims

1. Multi-stage polymerization process for the production of a multi-modal polyethylene in at least two staged reactors connected in series comprising at least

   (i) polymerizing in a first slurry phase stage ethylene monomers and optionally one or more alpha-olefine comonomers, in the presence of a Ziegler-Natta polymerization catalyst system to obtain a first polyethylene fraction component (A),

(ii) polymerizing in a second gas stage ethylene monomers and one or more alpha-olefine comonomers, in the presence of a Ziegler-Natta polymerization catalyst system to obtain a second polyethylene fraction component (B),

one of fraction component (A) or (B) being the lower molecular weight component of the polyethylene, the other being the higher molecular weight component of the polyethylene,
wherein the second polymerization step is carried out in the presence of the polymerization product of the first polymerization step and
whereby the Ziegler-Natta polymerization catalyst system comprises

1) a solid procatalyst formed by contacting at least:

a) a Mg-alcoholate complex of the formula (I):

$Mg(OR_1)_{2-n}(R_1)_n$, wherein each $R_1$ independently represents a $C_1$-$C_{20}$ hydrocarbyl group and $0 \leq n < 2$ and may or may not be an integer;

b) an aluminium compound of the formula (II)

$Al(R_2)_mX_{3-m}$, wherein each $R_2$ independently represents an alkyl of up to 6 carbon atoms; each X is independently a halogen; $0 \leq m < 3$ and m and may or may not be an integer

c) a vanadium compound and a titanium compound in portions such as to provide a molar ratio of V:Ti from 10:90 to 90:10

in order to yield the solid procatalyst and
2) one or more organometallic cocatalyst(s) of the formula (III)

$$\begin{array}{c} (RO)_z \\ | \\ R_y\text{-}Al\text{-}Cl_x \end{array}$$

wherein each R is independently a $C_1$-$C_{20}$-alkyl group, $0 \leq x \leq 2$; $1 \leq y \leq 3$; $0 \leq z \leq 2$ and $x + y + z = 3$, x, y and z may or may not be an integer,
yielding a multi-modal polyethylene composition with a density according to ISO 1183 of 900 to 980 kg/m$^3$,
whereby the process shows a reduced change of comonomer response with polymerization time and a more stable comonomer conversion with polymerization time compared to multi-stage processes using Ziegler-Natta catalysts with 100% Ti.

**2.** Process according to claim 1, wherein the polymerization process includes one or two additional polymerization steps, subsequent to the second polymerization step.

**3.** Process according to claim 2, wherein the one or two additional polymerization steps comprise gas phase polymerization stages.

**4.** Process according to claim 1, wherein the polymerization process is a two-stage process comprising

(i) polymerizing in a first slurry phase stage ethylene monomers and optionally one or more alpha-olefine comonomers, in the presence of a Ziegler-Natta polymerization catalyst system to obtain a first polyethylene fraction component (A) and
(ii) polymerizing in a second gas or slurry phase stage ethylene monomers and one or more alpha-olefine comonomers, in the presence of a Ziegler-Natta polymerization catalyst system to obtain a second polyethylene fraction component (B),

one of fraction component (A) or (B) being the lower molecular weight component of the linear low density polyethylene, the other being the higher molecular weight component of the linear low density polyethylene,

wherein the split (wt%/wt%) between the fraction component (A) and (B) is from 85:15 to 25:75.

**5.** Process according to claim 4, wherein faction component (A) produced in the first slurry phase stage is the lower molecular weight component of the linear low density polyethylene and faction component (B) produced in the second stage is the higher molecular weight component of the linear low density polyethylene

**6.** Process according to claim 4 or 5, wherein the split (wt%/wt%) between the fraction component (A) and (B) is from 75:25 to 30:70.

**7.** Process according to any of claims 1 to 6, wherein the alpha-olefine comonomer is a $C_{3-12}$-alpha-olefine, preferably selected from but-1-ene, hex-1-ene, 4-methyl-pent-1-ene, hept-1-ene, oct-1-ene, and dec-1-ene.

**8.** Process according to claim 7, wherein the comonomer is hex-1-ene or but-1-ene or a mixture of hexene and butene.

**9.** Process according to any of claims 1 to 8, wherein the solid procatalyst used in the process is prepared by contacting at least

[A] a solid magnesium aluminium complex containing magnesium, halogen and aluminium, said complex being obtained by

(a1) adding a solution of a magnesium compound of the formula (I):

$Mg(OR_1)_{2-n}(R_1)_n$, wherein each $R_1$ independently represents a $C_1$-$C_{20}$ hydrocarbyl group; and $0 \leq n < 2$ and may or may not be an integer;
to a solution of a compound of formula (II): $Al(R_2)_mX_{3-m}$, wherein each $R_2$ independently represents an alkyl of up to 6 carbon atoms; each X is independently a halogen, $0 \leq m < 3$ and m may or may not be an integer,

(a2) separating the solidified reaction product from the reaction mixture and washing the product with a wash solution until a molar ratio of aluminium to magnesium has a value of at least 0.3 and

[B] with a vanadium compound and a titanium compound in portions such as to provide a molar ratio of V:Ti from 10:90 to 90:10 in order to yield the procatalyst.

**10.** Process according to any of claim 1 to 9, wherein the quantity of vanadium and titanium compound which are employed to prepare the procatalyst is such that the molar ratio of V:Ti is from 25:75 to 75:25, preferably 40:60 to 60:40.

**11.** Process according to any of claim 1 to 9, wherein the organometallic cocatalyst of the formula (III) can be added together with the procatalyst only in a preceding prepolymerization step or into the first polymerization step, or additional organometallic cocatalyst of the formula (III) can also be added in one or more of the subsequent polymerization steps.

**12.** Process according to any of claims 1 to 11, wherein the final multi-modal polyethylene has a density according to ISO 1183 of 915 to 970 $kg/m^3$and a bulk density of the polymer powder, determined according to ASTM D1895-96, method A, of above 260 $kg/m^3$, an $MFR_5$ according to ISO 1133 (190°C, 5 kg load) of 0.02 to 10 g/10 min and an $MFR_2$, according to ISO 1133 (190°C, 21.6 kg load) of 1 to 100 g/10 min and a $C_3$-$C_{12}$-comonomer content of 1 to 10 wt%.

**13.** A polymer obtainable by the process as claimed in any one of claims 1 to 12.

**14.** Use of a polymer as claimed in claim 13 for the manufacture of pipes and films.

**15.** Use of a solid Ziegler-Natta catalyst system comprising:

1) a solid procatalyst formed by contacting at least:

a) a Mg-alcoholate complex of the formula (I):

$Mg(OR_1)_{2-n}(R_1)_n$, wherein each $R_1$ independently represents a $C_1$-$C_{20}$ hydrocarbyl group and $0 \le n < 2$ and may or may not be an integer;

b) an aluminium compound of the formula (II)

$Al(R_2)_mX_{3-m}$, wherein each $R_2$ independently represents an alkyl of up to 6 carbon atoms; each X is independently a halogen; $0 \le m < 3$ and m and may or may not be an integer

c) a vanadium compound and a titanium compound in portions such as to provide a molar ratio of V:Ti from 10:90 to 90:10

in order to yield the solid procatalyst and
2) one or more organometallic cocatalyst(s) of the formula (III)

$$(RO)_z$$
$$|$$
$$R_y\text{-}Al\text{-}Cl_x$$

wherein each R is independently a $C_1$-$C_{20}$-alkyl group, $0 \le x \le 2$; $1 \le y \le 3$; $0 \le z \le 2$ and $x + y + z = 3$; x, y and z may or may not be an integer,

in a multi-stage polymerization process to produce multi-modal polyethylene with a density according to ISO 1183 of 900 to 980 kg/m$^3$, an $MFR_5$ according to ISO 1133 (190°C, 5 kg load) of 0.02 to 10 g/10 min, an $MFR_{21}$ according to ISO 1133 (190°C, 21.6 kg load) of 1 to 100 g/10 min, a bulk density of polymer powder, determined according to ASTM D1895-96, method A, of the LLDPE of above 260 kg/m$^3$ and a $C_3$-$C_{12}$-comonomer content of 1 to 10 wt%, the process shows a reduced change of comonomer response with polymerization time and a more stable comonomer conversion with polymerization time compared to multi-stage processes using Ziegler-Natta catalysts with 100% Ti.

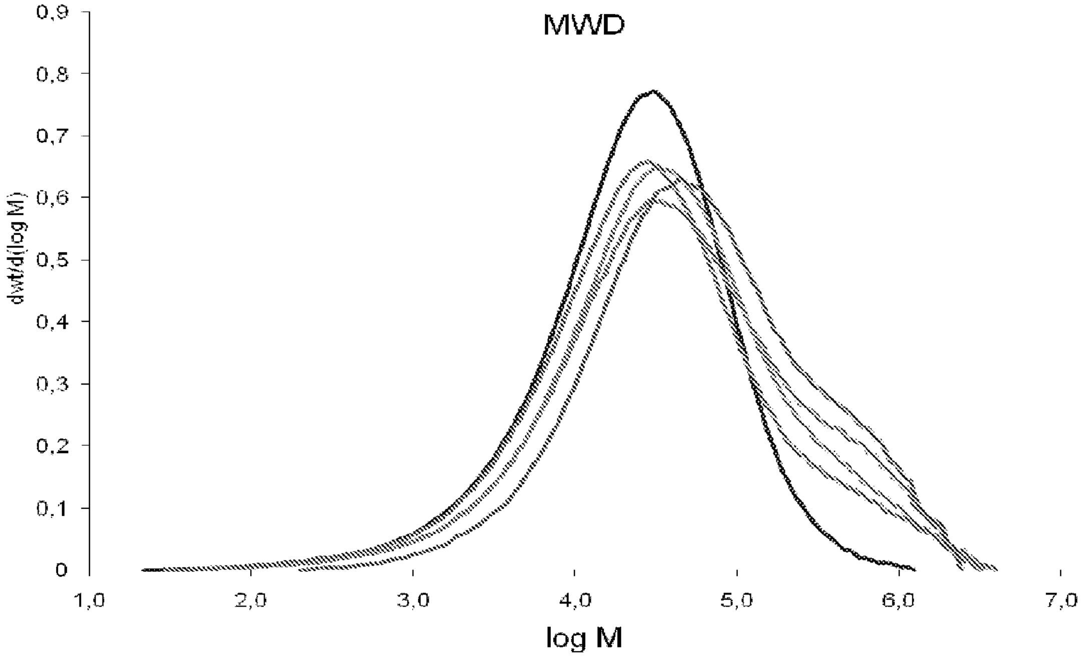


**Figure 1.** GPC curves for examples 2, 3, 4, 5 and 6. Amount of high molecular weight polymer is just increasing accoding to increased split (more GPR polymer is produced)

Europäisches Patentamt
European Patent Office
Office européen des brevets

# EUROPEAN SEARCH REPORT

Application Number
EP 09 15 3514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 030 991 A (BOREALIS TECH OY [FI]) 4 March 2009 (2009-03-04)<br>* examples *<br>* claims *<br>* paragraph [0107] * | 1-15 | INV.<br>C08F10/00<br>C08F4/685 |
| X | WO 01/00685 A (UNION CARBIDE CHEM PLASTIC [US]) 4 January 2001 (2001-01-04)<br>* page 1, line 5 - line 15 *<br>* page 2, line 3 - line 13 *<br>* page 17, line 14 *<br>* page 18, line 27 - page 20, line 14 *<br>* claims; examples * | 1-15 | |
| A | EP 1 780 225 A (BOREALIS TECH OY [FI]) 2 May 2007 (2007-05-02)<br>* the whole document * | 1-15 | |
| D,A | WO 2004/055069 A (BOREALIS TECH OY [FI]; GAROFF THOMAS [FI]; WALDVOGEL PAEIVI [FI]; PESO) 1 July 2004 (2004-07-01)<br>* the whole document * | 1-15 | |

TECHNICAL FIELDS SEARCHED (IPC)

C08F

The present search report has been drawn up for all claims

1

| Place of search | Date of completion of the search | Examiner |
|---|---|---|
| Munich | 19 March 2009 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 15 3514

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2009

| Patent document cited in search report | | Publication date | Patent family member(s) | | | Publication date |
|---|---|---|---|---|---|---|
| EP 2030991 | A | 04-03-2009 | WO | 2009027379 | A1 | 05-03-2009 |
| WO 0100685 | A | 04-01-2001 | AU | 6060100 | A | 31-01-2001 |
| | | | BR | 0012201 | A | 26-03-2002 |
| | | | CA | 2369174 | A1 | 04-01-2001 |
| | | | CN | 1423653 | A | 11-06-2003 |
| | | | CZ | 20014587 | A3 | 17-04-2002 |
| | | | DE | 60037269 | T2 | 27-11-2008 |
| | | | EP | 1232161 | A2 | 21-08-2002 |
| | | | ES | 2292453 | T3 | 16-03-2008 |
| | | | JP | 2003509338 | T | 11-03-2003 |
| | | | NO | 20016219 | A | 19-12-2001 |
| | | | PL | 364858 | A1 | 27-12-2004 |
| | | | US | 2003050184 | A1 | 13-03-2003 |
| EP 1780225 | A | 02-05-2007 | CN | 101351479 | A | 21-01-2009 |
| | | | EP | 1951765 | A1 | 06-08-2008 |
| | | | WO | 2007051607 | A1 | 10-05-2007 |
| WO 2004055069 | A | 01-07-2004 | AU | 2002368470 | A1 | 09-07-2004 |
| | | | AU | 2003266419 | A1 | 09-07-2004 |
| | | | CN | 1708518 | A | 14-12-2005 |
| | | | WO | 2004055068 | A1 | 01-07-2004 |
| | | | EP | 1572760 | A1 | 14-09-2005 |
| | | | US | 2006154805 | A1 | 13-07-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004055068 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 707513 A
- EP 1633466 A
- EP 1484343 A
- WO 9704015 A


### Non-patent literature cited in the description


- **K. B. McAuley.** Modelling, Estimation and Control of Product Properties in a Gas Phase Polyethylene Reactor. *Thesis, McMaster University,* August 1991
- **K. McAuley ; J. McMacGregor.** *AIChE Journal,* vol. 37 (6), 825-835
- **B. Hagström.** Prediction of melt flow rate (MFR) of bimodal polyethylenes based on MFR of their components. *Conference on Polymer Processing (The Polymer Processing Society), Extended Abstracts and Final Programme,* 19 August 1997, vol. 4, 13